# EUROPEAN PATENT APPLICATION

(11) **EP 0 860 613 A2**
(43) Date of publication of application: **26.08.1998**
(21) Application number: 98301119.8
(22) Date of filing: 16.02.1998
(51) Int. Cl.: F16B 2/10

(54) **Clamp**

(30) Priority: 19.02.1997 GB 9703466
(71) Applicant: Doughty Engineering Limited, Ringwood, Hampshire BH24 1NZ (GB)
(72) Inventor: Lister, Mervyn Boyd, Ringwood, Hampshire BH24 3DG (GB)
(74) Representative: Lomas, Geoffrey Michael

(57) **Abstract**

A clamp assembly 1 for use in suspending articles such as theatrical lighting from a tubular support 70 comprises a hook-shaped suspension assembly 2, a jaw 10 carried by the suspension assembly, and a snap engageable locking mechanism 3 adapted to secure the jaw in a closed position, the arrangement being such that the suspension assembly 2 can be hung on the tubular support 70 and carry a suspended light, whilst the locking mechanism 3 is still released. The jaw 10 can then be secured in a closed condition by snap-engaging the snap-engaging the locking mechanism 3.

## Description

The present invention relates to clamps for attaching articles to an elongate support member, and is concerned particularly, although not exclusively, with clamps for attaching articles to a tubular support member.

When suspending articles, such as theatrical lighting and sound equipment, from scaffold tubing it is often necessary to provide a secure clamp means.

Various clamp assemblies are commonly used. One common type of clamp for theatrical lighting utilises a clamp screw having a butterfly on the outer end which can be turned by finger pressure to urge the inner end of the screw against the support member. This has the disadvantage that the support member can be damaged by the screw.

Another type employs bolts to hold the clamp in a closed condition, and tools are required to tighten and subsequently release the bolts.

Often such clamps require two operatives to secure the clamp in position, one operative supporting the clamp whilst the other operative tightens the clamp screw or bolts.

There is therefore a requirement for a clamp which can be secured in place with a minimum of effort, and which will not readily damage the support member.

According to the present invention, a clamp assembly comprises a hook-shaped suspension assembly, a jaw carried by the suspension assembly, and a snap engageable locking mechanism adapted to secure the jaw in a closed position, the arrangement being such that the suspension assembly can be hung on an elongate support member and support a suspended member carried by the suspension assembly whilst the locking mechanism is still released, and the jaw can then be secured in a closed condition by bringing the snap mechanism to a locked condition.

Although the inventive clamp assembly is primarily intended for use with horizontal support members, it may be used with a vertical support member if desired.

The snap mechanism is preferably an over-centred locking mechanism.

Thus the weight of a suspended load, such as a lighting unit, can be supported by the clamp assembly even prior to fastening of the locking mechanism, thereby in many cases enabling a single operative to secure the unit in place, because the load itself does not need to be supported by an operative as the clamp is being secured. The over-centred mechanism can be quickly operated, without tools, to achieve a securely clamped unit.

The jaw is preferably pivotally carried by the suspension assembly and is preferably in the form of a curved lever provided at one end with an actuating portion adapted to be engaged by the support member as the suspension assembly is hooked onto the support member, with the jaw in an open condition, the arrangement being such that the engagement between the actuating portion and the support member pivots the jaw from the open condition towards a closed condition of the jaw.

The opposite, free end of the jaw is preferably provided with a projecting lobe with which the over-centred mechanism is adapted to co-operate. The over-centred mechanism preferably comprises a U-shaped catch which can be engaged and disengaged with the projecting lobe of the jaw lever.

The over-centred mechanism preferably carries a slidable security catch mechanism, the arrangement being such that when the over-centred mechanism is in a closed condition and the security catch mechanism is in a non-operative state the catch mechanism prevents movement of the over-centred mechanism and when the security catch mechanism is in an operative state, the over-centred mechanism is movable to the open condition.

The locking assembly preferably comprises a substantially L-shaped lever member. The L-shaped lever member is preferably formed with an annular ring at one end and is pivotally attached to the hook-shaped assembly.

An embodiment of the invention will now be described, by way of example only, with reference to the accompanying drawings in which:
Figure 1 shows a side view of a clamp assembly for clamping articles to a support frame, the clamp assembly being shown in a closed condition,
Figure 2 shows a front view of the clamp assembly shown in Figure 1,
Figure 3 shows a cross section of the clamp assembly on the line AA of Figure 2, and
Figure 4 shows various stages of clamping the assembly to a support frame.

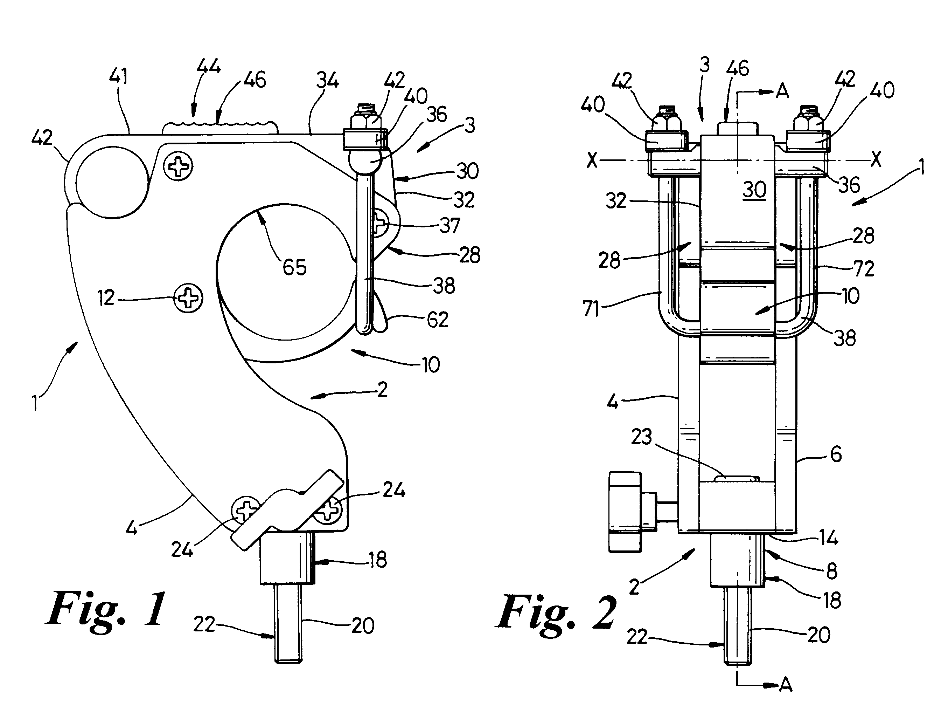

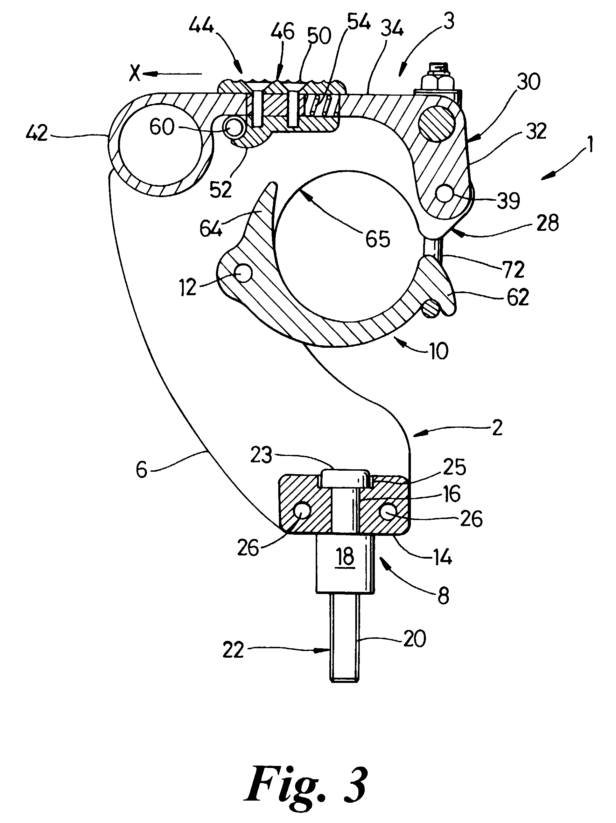

Referring to Figures 1, 2 and 3, a clamp assembly 1 comprises a hook shaped suspension assembly 2 and a locking assembly 3.

The hook shaped assembly 2 comprises two substantially parallel spaced-apart hook shaped suspension plates 4, 6; an attachment means 8 and a curved lever jaw 10 mounted pivotally about a pin 12.

The attachment means 8 comprises a substantially rectangular block 14 formed with a substantially vertical through bore 16. Extending through bore 16 is a pin 18 formed with an external thread 20 at the lower-most portion 22 and a head 23 disposed within a counterbore 25 to bore 16.

In use, the external thread 20 will co-operate with an internal threaded portion of an article, supported by the assembly, such as a piece of theatrical lighting equipment.

The block 14 is attached to the respective hook shaped plates 4, 6 by means of threaded bolts 24 which co-operate with corresponding threaded bores 26 in the block 14.

The locking assembly 3 is in the form of an over-centred clamp mechanism which comprises a generally L-shaped lever 30 formed with a downwardly projecting limb 32 and a horizontally projecting limb 34 (as shown in Figures 1 to 3). Extending perpendicularly through the uppermost region of the limb 32 (with respect to the plan views of Figures 1 to 3) is a pin member 36. The pin member 36 is rotatable about axis xx. The locking assembly 3 also comprises a generally U-shaped catch member 38. The two uppermost ends of the catch member 38 are formed with external threads which extend through the respective ends of the pin member 36 such that respective washers 40 may be placed on the catch ends and security nuts 42 may be screwed onto said ends of the catch member 38.

The lower end of the limb 32 is formed with a through hole 39. The hole 39 is formed to receive pivot bolts 37 which extend into the hole 39 through the respective flat hook-shaped plates 4, 6 such that the lower end of the limb 32 is held pivotally between the hook-shaped plates 4, 6. The end 41 of the horizontal portion 34 is formed with an annular ring portion 42.

The locking assembly 3 carries a resilient catch mechanism 44. The resilient catch mechanism comprises a slidable catch member 46 formed with an upper textured surface 50 and a generally hook shaped member 52 projecting from the lowermost surface of the said catch 46. The catch assembly 44 also comprises a compression spring 54 which urges the catch 46 in the direction X such that the hook shaped member 52 abuts a pin 60 in the closed non-operative condition of the locking assembly 3.

The lever 10 is formed with a downwardly extending lobe portion 62 disposed at the outer end of the lever jaw 10. The lever jaw 10 is also formed with a generally upwardly extending actuating portion 64 disposed at the inner end of the lever 10.

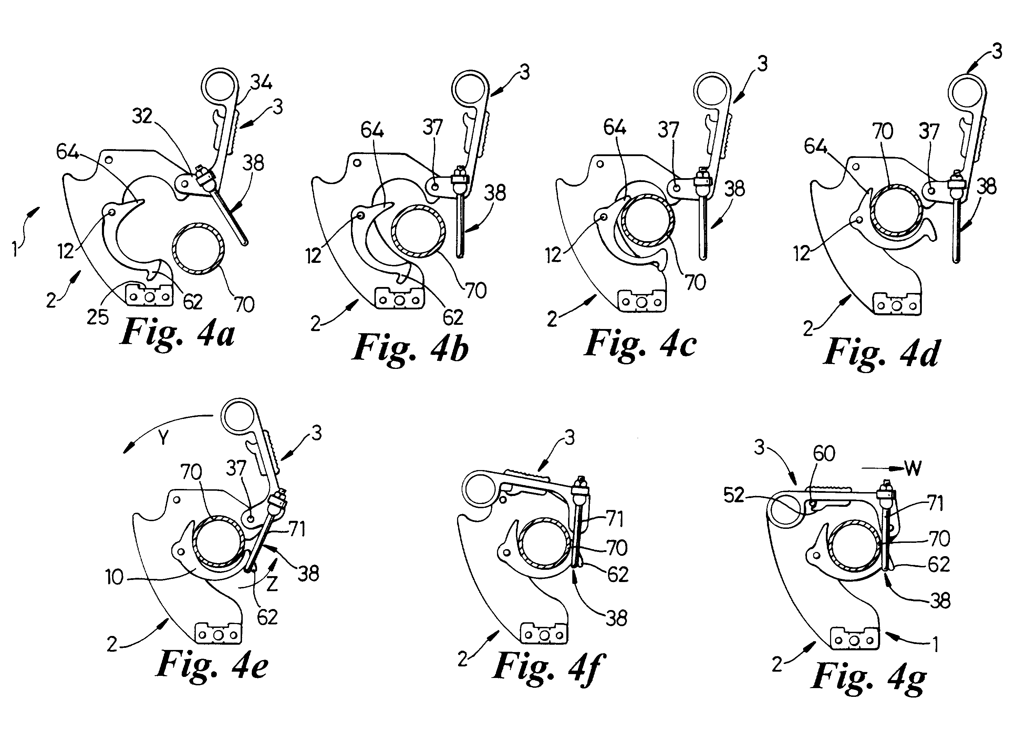

Referring to Figure 4, in the open states 4a and 4b, the locking assembly 3 has been rotated about the bolts 37 such that the limb 32 is in the generally horizontal orientation and the limb 34 is in the generally vertical orientation. The U-shaped catch member 38 has been rotated about axis xx such that there is substantially clear access to the curved radial portion 65 of the hook shaped plates 4, 6 except for the actuating portion 64 of the lever 10.

As Figure 4a shows, the lever 10 has rotated under its own weight about pin 12 such that the lobe portion 62 of the lever jaw 10 is disposed between the plates 4, 6 and the actuating portion 64 of the lever jaw 10 protrudes from between the said plates 4, 6. The hook-shaped assembly 1 is then capable of being placed on a tubular elongate support member 70, by an operative, and the actuating portion 64 of the lever jaw 10 will come into contact with the support member 70, as shown in Figure 4c, such that the lever 10 rotates counter-clockwise about the pin 12 until the lever jaw 10 is in the orientation shown in Figure 4d. The lever jaw 10 then substantially extends around the outer circumference of the support member 70 such that the hook-shaped assembly 1 substantially abuts the majority of the circumference of the support member 70.

The U-shaped catch member 38 is then placed over the lobe portion 62.

As the L-shaped lever 30 is rotated, by an operative, about the bolts 37 in direction Y, the U-shaped catch member 38 urges the lever jaw 10 in direction Z such that the support member 70 is clamped between the lever jaw 10 and the two hook-shaped plates 4,6 of the hook-shaped assembly 2. As the substantially vertical sections 71, 72 of the U-shaped catch member 38 first come adjacent then pass the bolts 37 (see Figure 4f), the lever 30 snaps to a closed condition (see Figure 4g). The hook-shaped member 52 comes into contact with the pin 60 as the lever 30 snaps to a closed condition, and the slidable member 46 is forced in the direction W so compressing the spring 54. After the end of member 52 has passed the pin 60, the spring 54 urges the member 46 in the opposite direction to direction W such that the hook-shaped member 52 abuts pin 60. When the catch mechanism is in the non-operative condition, the catch mechanism 44 prevents the L-shaped lever 30 from being rotated. An operative has to operate the catch mechanism 44 by sliding the catch member 44 in the direction W so drawing the hook member 52 clear of the pin 60; the locking mechanism 3 may then be rotated into an open condition and the assembly 1 lifted clear of the support member 70.

## Claims

1. A clamp assembly characterised in that it comprises a hook-shaped suspension assembly (2), a jaw (10) carried by the suspension assembly (2), and a snap engageable locking mechanism (3) adapted to secure the jaw (10) in a closed position, the arrangement being such that the suspension assembly (2) can be hung on an elongate support member (70) and support a suspended member (not shown) carried by the suspension assembly (2) whilst the locking mechanism (3) is still released, and the jaw (10) can then be secured in a closed condition by bringing the snap mechanism (3) to a locked condition.

2. A clamp assembly as claimed in claim 1 in which the snap mechanism (3) is an over-centred locking mechanism.

3. A clamp assembly as claimed in claim 1 or claim 2 in which the jaw (10) is pivotally carried by the suspension assembly (2).

4. A clamp assembly as claimed in claim 3 in which the jaw (10) is in the form of a curved lever provided at one end with an actuating portion (64) adapted to be engaged by the support member (70) as the suspension assembly (2) is hooked onto the support member (70), with the jaw (10) in an open condition, the arrangement being such that the engagement between the actuating portion (64) and the support member (70) pivots the jaw (10) from the open condition towards a closed condition.

5. A clamp assembly as claimed in claim 4 as appended to claim 2 in which the opposite, free end of the jaw (10) is provided with a projecting lobe (62) with which the over-centred mechanism is adapted to co-operate.

6. A clamp assembly as claimed in claim 5 in which the over-centred mechanism comprises a U-shaped catch (38) which can be engaged and disengaged with the projecting lobe (62) of the jaw (10).

7. A clamp assembly as claimed in claim 2, or as claimed in any one of claims 3 to 6 each as appended to claim 2, in which the over-centred mechanism (3) carries a slidable security catch mechanism (42), the arrangement being such that when the over-centred mechanism (3) is in a closed condition and the security catch mechanism (42) is in a non-operative state the catch mechanism (42) prevents movement of the over-centred mechanism (3) and when the security catch mechanism is in an operative state, the over-centred mechanism is movable to the open condition.

8. A clamp assembly as claimed in any one of the preceding claims in which the locking assembly comprises a substantially L-shaped lever member (30).

9. A clamp assembly as claimed in claim 8 in which the L-shaped lever member (30) is formed with an annular ring (42) at one end and is pivotally attached (39) to the hook-shaped assembly (2).
